# EUROPÄISCHE PATENTSCHRIFT

(11) **EP 3 760 351 B1**
(45) Veröffentlichungstag und Bekanntmachung des Hinweises auf die Patenterteilung: **26.06.2024**
(21) Anmeldenummer: 20182845.6
(22) Anmeldetag: 06.02.2013
(51) Int. Cl.: B23B 31/117, B23Q 11/10

(54) **SCHRUMPFFUTTER MIT WERKZEUGKÜHLUNG**
SHRINK-FIT CHUCK WITH TOOL COOLING
MANDRIN DE FRETTAGE AVEC REFROIDISSEMENT D'OUTIL

(30) Priorität: 29.02.2012 DE 102012101672
(43) Veröffentlichungstag der Anmeldung: 06.01.2021
(62) Teilanmeldung aus: 13704054.9
(73) Patentinhaber: Haimer GmbH, 86568 Igenhausen (DE)
(72) Erfinder: Haimer, Franz, 86568 Igenhausen (DE); Haimer, Josef, 86568 Igenhausen (DE)
(74) Vertreter: Charrier Rapp & Liebau

(56) Entgegenhaltungen:
- DE-A1- 10 244 759
- DE-A1-102008 044 996
- US-A1- 2007 077 132

## Beschreibung

Die Erfindung betrifft ein Schrumpffutter mit Werkzeugkühlung nach dem Oberbegriff des Anspruchs 1.

Aus der DE 102 44 759 A1 ist ein derartiges Schrumpffutter bekannt. Dieses weist einen Aufnahmekörper mit einer Aufnahmeöffnung für einen Werkzeugschaft, einen im vorderen Bereich der Aufnahmeöffnung angeordneten Stau- und Sammelraum und einen zu dem Stau- und Sammelraum führenden Kühlmittelkanal auf. Der Stau- und Sammelraum wird durch einen am vorderen Ende der Aufnahmeöffnung angeordneten Ringsteg nach vorne begrenzt, wobei der Innendurchmesser des Ringstegs dem Innendurchmesser der Aufnahmeöffnung entspricht. In dem Ringsteg sind Auslassöffnungen für den Austritt eines über den Kühlmittelkanal in den Stau- und Sammelraum geleiteten Kühlmittels nach außen vorgesehen.

Aufgabe der Erfindung ist es, ein Schrumpffutter der eingangs genannten Art zu schaffen, das kostengünstig herstellbar ist und dennoch eine optimale Kühlung der Werkzeuge ermöglicht.

Diese Aufgabe wird durch ein Schrumpffutter mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Schrumpffutter sind die Auslassöffnungen gegenüber den Kühlmittelzuführkanälen in Umfangsrichtung des Aufnahmekörpers zum Teil oder vollständig gegeneinander versetzt. Dadurch kann eine optimale Stauwirkung innerhalb des Stau- und Sammelraums und eine gleichmäßigere Verteilung des Kühlmittels auf die Auslassöffnungen erreicht werden. Beim Schrumpfvorgang macht der Ringsteg die Verformung des Aufnahmekörpers mit, so dass ein problemloses Einführen bzw. Entnehmen eines Werkzeugs ermöglicht wird und nach dem Einschrumpfen ein möglichst geringer Spalt zwischen dem Ringsteg und dem Werkzeugschaft besteht. Dadurch kann ein Kühlmittel auf einfache und effektive Weise ohne Kühlmittelverlust zu den im Ringsteg vorgesehenen Auslassöffnungen geleitet und von dort gezielt an die zu kühlenden Bereiche geführt werden. Idealerweise sollte kein Ringspalt zwischen dem Ringsteg und dem Werkzeugschaft bestehen, so dass die gesamte Kühlflüssigkeit durch die Auslassöffnungen austritt. Falls jedoch durch fertigungsbedingte Toleranzen dennoch ein kleiner Spalt zwischen dem Ringsteg und dem Werkzeugschaft besteht, sollte der Querschnitt des Ringspalts kleiner als 20% des Gesamtquerschnitts der Auslassöffnungen betragen.

In einer möglichen Ausführung kann z.B. der Innendurchmesser des Ringstegs dem Innendurchmesser der Aufnahmeöffnung entsprechen.

In einer vorteilhaften Ausgestaltung wird der Ringsteg durch eine am vorderen Ende des Aufnahmekörpers angeordnete und mit diesem fest verbundene Deckscheibe gebildet. Dadurch können unterschiedliche Schrumpffutter besonders rational und kostengünstig hergestellt werden. Es sind lediglich unterschiedlich gestaltete Deckscheiben erforderlich um in Verbindung mit einheitlichen Aufnahmekörpern kostengünstige, individuell an den jeweiligen Anwendungsbereich angepasste Schrumpffutter zu ermöglichen. Die Deckscheiben können mit Auslassöffnungen unterschiedlichster Form an die unterschiedlichen Anforderungen, z.B. die Länge und den Durchmesser der Werkzeuge, angepasst werden. Durch eine unlösbare Verbindung des Aufnahmekörpers mit der Deckscheibe ist zudem eine dauerhafte Fixierung mit einer entsprechend geringen Ausfallwahrscheinlichkeit der Verbindung gegeben. Der Ringsteg kann aber auch einteilig mit dem Aufnahmekörper ausgeführt sein.

Eine genaue Positionierung der Deckscheibe kann dadurch erreicht werden, dass sie in eine entsprechende Vertiefung an der Vorderseite des Grundkörpers eingesetzt wird.

In einer besonders vorteilhaften Ausführungsform ist die Deckscheibe mit dem Aufnahmekörper verschweißt, wodurch sich eine beständige und gut abdichtende Verbindung ergibt.

Die Auslassöffnungen können durch Schlitze, Langlöcher, Bohrungen und dergleichen oder durch eine Kombination aus diesen gebildet sein. Hierdurch wird eine optimale Anpassung an die jeweiligen Anforderungen der Kühlmittelführung an das Werkzeug und/oder Werkstück ermöglicht.

Die Auslassöffnungen können zudem so gestaltet sein, dass sie den Austritt von Kühlmittel in verschiedenen Winkeln im Bezug auf das Schrumpffutter ermöglichen. Dies kann beispielsweise dadurch erreicht werden, dass die als Bohrungen ausgeführten Auslassöffnungen verschiedene Winkel im Bezug auf die Mittelachse des Schrumpffutters aufweisen. Hierdurch wird eine gezielte Strahlführung auf bestimmte Teile des Werkzeugs und/oder des Werkstücks ermöglicht.

Der oder die Kühlmittelzuführkanäle können als Bohrung innerhalb des Aufnahmekörpers oder auch als Längsnuten am Innenumfang der Aufnahmeöffnung ausgebildet sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel eines Schrumpffutters in einer Perspektive;
- **Figur 2**: das Schrumpffutter von Figur 1 in einem Längsschnitt;
- **Figur 3**: eine Deckscheibe des Schrumpffutters von Figur 1 in einer Vorderansicht;
- **Figur 4**: eine vergrößerte Detailansicht Y von Figur 2;
- **Figur 5**: einen Aufnahmekörper eines zweiten Ausführungsbeispiels eines Schrumpffutters in einem Längsschnitt;
- **Figur 6**: eine vergrößerte Detailansicht X von Figur 5;
- **Figur 7**: ein zweites Ausführungsbeispiel einer Deckscheibe in einer Vorderansicht und
- **Figur 8**: ein drittes Ausführungsbeispiel einer Deckscheibe in einer Vorderansicht und in Schnittansichten.

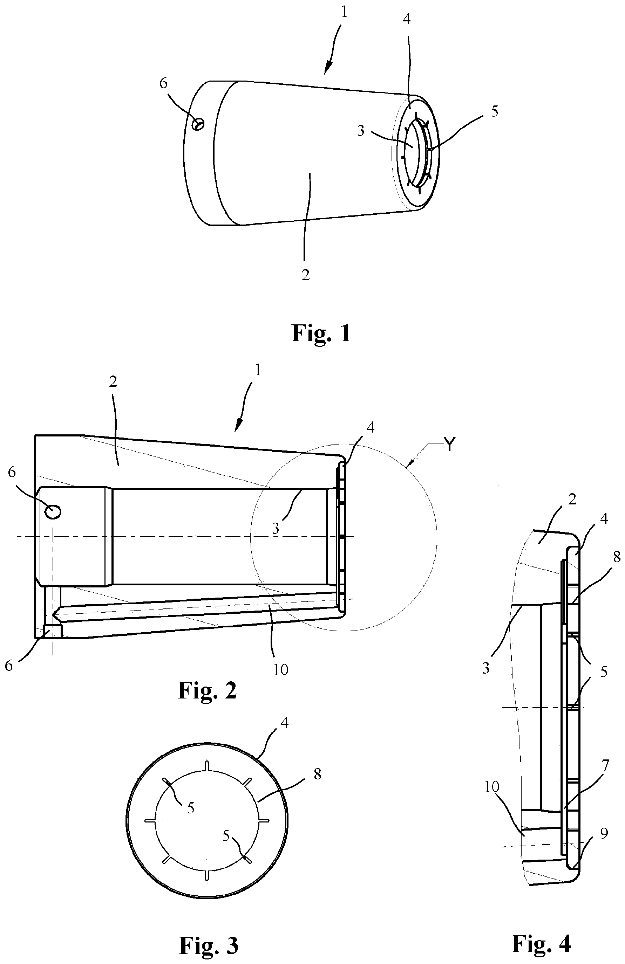

Figur 1 zeigt ein Schrumpffutter 1 mit einem Aufnahmekörper 2, der eine Aufnahmeöffnung 3 für einen Werkzeugschaft eines Werkzeugs enthält. An dem vorderen Ende des Aufnahmekörpers 2 ist eine mit dem Aufnahmekörper 2 unlösbar verbundene Deckscheibe 4 mit mehreren schlitzfömigen Auslassöffnungen 5 angeordnet. In dem Aufnahmekörper 2 sind ferner mehrere in Umfangsrichtung beabstandete radiale Bohrungen 6 für die Zuführung eines Kühlmittels vorgesehen.

Wie besonders aus den Figuren 2 und 4 hervorgeht, weist der Aufnahmekörper 2 im vorderen Bereich der Aufnahmeöffnung 3 einen als Ringnut ausgeführten Stau- und Sammelraum 7 auf. Die Deckscheibe 4 bildet einen nach innen ragenden Ringsteg 8, welcher den Stau- und Sammelraum 7 nach vorne und zum Werkzeugschaft hin begrenzt. Der Innendurchmesser des Ringstegs 8 entspricht dem Innendurchmesser der Aufnahmeöffnung 3, so dass zwischen dem Ringsteg 8 und dem Werkzeugschaft nach dem Einschrumpfen des Werkzeugs möglichst kein Ringspalt besteht.

Bei der gezeigten Ausführung ist die Deckscheibe 4 in eine Vertiefung 9 an der Vorderseite des Aufnahmekörpers 2 eingesetzt und z.B. durch Verschweißen unlösbar mit dem Aufnahmekörper 2 verbunden. Dadurch kann die Deckscheibe 2 die Verformung des Aufnahmekörpers 2 bei der zum Einschrumpfen des Werkzeugs in den Aufnahmekörpers 2 erforderlichen Erwärmung und Abkühlung entsprechend mitmachen und auch der Ringsteg 8 kann nach dem Einschrumpfen des Werkzeugs möglichst zur Anlage an dem Werkzeugschaft gelangen. Das dem Stau- und Sammelraum 7 zugeführte Kühlmittel soll über die schlitzförmigen Auslassöffnungen 5 und nicht über einen Ringspalt zwischen dem Ringsteg 8 und dem Werkzeugschaft austreten.

In Figur 2 ist erkennbar, dass innerhalb des Aufnahmekörpers 2 in Längsrichtung verlaufende Bohrungen als Kühlmittelzufuhrkanäle 10 angeordnet sind, die sich von den radialen Bohrungen 6 bis zum Stau- und Sammelraum 7 erstrecken. Über die Bohrungen 6 und die Kühlmittelzufuhrkanäle 10 kann ein Kühlmittel in den Stau- und Sammelraum 7 und von dort über die schlitzförmigen Auslassöffnungen 5 zu einem im Aufnahmekörper 2 gespannten Werkzeug geleitet werden.

Aus Figur 3 geht hervor, dass sich die Auslassöffnungen 5 in Form längerer und schmaler Schlitze in dem durch die Deckscheibe 4 gebildeten Ringsteg 8 von dessen Innenumfang in radialer Richtung sternförmig nach außen erstrecken. Durch die Ausführung der Auslassöffnungen 5 als lange und schmale Schlitze kann ein hoher Spritzwinkel auf den Schneidbereich des Werkzeugs ermöglicht und eine hohe Strömungsgeschwindigkeit erreicht werden. Dies ermöglicht eine zuverlässige und zielgerichtete Kühlung.

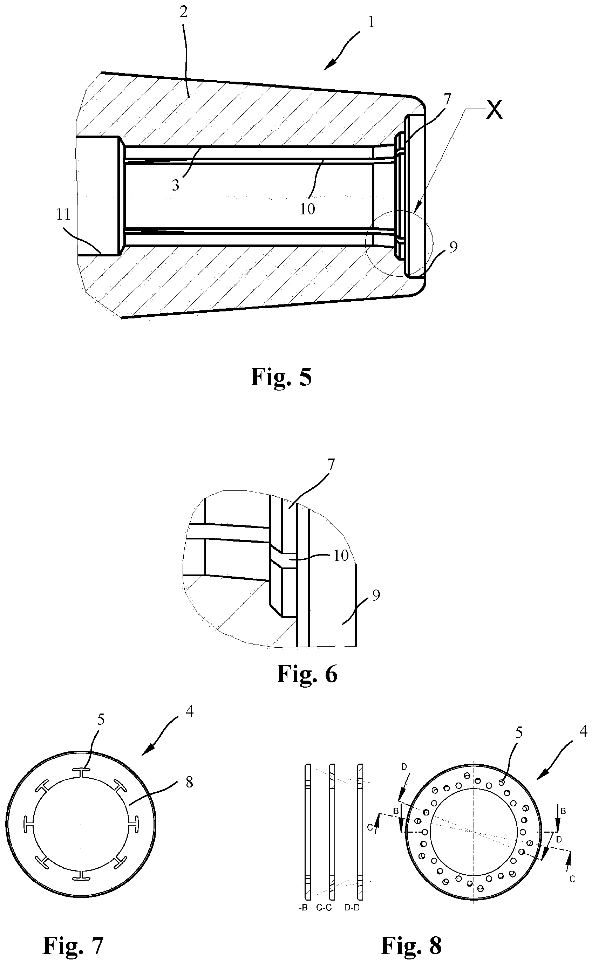

In Figur 5 ist ein Aufnahmekörper 2 eines weiteren Ausführungsbeispiels eines erfindungsgemäßen Schrumpffutters gezeigt. Im Unterschied zu der vorhergehenden Ausführungsform sind die Kühlmittelzuführkanäle 10 als Längsnuten am Innenumfang der Aufnahmeöffnung 3 ausgebildet. Die als Längsnuten ausgeführten Kühlmittelzuführkanäle 10 verlaufen von einem hinteren erweiterten Bereich 11 der Aufnahmeöffnung 3 zum Stau- und Sammelraum 7. Das Kühlmittel wird auch hier durch die Kühlmittelzuführkanäle 10 zu dem Stau- und Sammelraum 7 geführt.

Aus Figur 6 geht hervor, dass auch dort an der Vorderseite des Aufnahmekörpers 2 eine Vertiefung 9 zur Aufnahme einer Deckscheibe 4 vorgesehen ist. Der Stau- und Sammelraum 7 kann mehrere Stufen mit unterschiedlichen Durchmessern aufweisen, um eine optimale Stau- und Sammelwirkung und damit eine gleichmäßige Verteilung des Kühlmittelstroms auf die Auslassöffnungen 5 zu erreichen. In der gezeigten Ausführung setzten sich die als Längsnuten ausgebildeten Kühlmittelzuführkanäle 10 zu einem Teil auch in den Stau- und Sammelraum 7 fort, wodurch ebenfalls eine günstige Verteilung des Kühlmittelstroms erreicht wird.

Die Figuren 7 und 8 zeigen weitere Ausführungsformen von Deckscheiben 4 mit Auslassöffnungen 5 unterschiedlicher Form. In Figur 7 sind T-förmige Schlitze gezeigt, welche sich von dem Innenumfang radial nach außen erstrecken. Figur 8 zeigt mehrere in Kreismustern angeordnete Bohrungen, welche unterschiedliche Winkel bezüglich der Mittelachse der Deckscheibe 4 aufweisen. Dadurch können verschiedene Bereiche des Werkzeugs gezielt gekühlt werden. Es ist offensichtlich, dass durch die Form, Anzahl, Abmessung und Orientierung der Auslassöffnungen die Kühlmittelzuführung zum Werkzeug an eine Vielzahl von Anforderungen individuell angepasst werden kann.

Die Erfindung ist nicht auf die vorstehend beschriebenen und in der Zeichnung dargestellten Ausführungsbeispiele der Deckscheiben beschränkt. So können z.B. die durch eine Variation der Form, Anzahl, Abmessung, und Orientierung der Auslassöffnungen sowie deren Lage auf der Scheibe die Kühlmittelzuführung zum Werkzeug optimiert werden.

## Patentansprüche

1. Schrumpffutter (1) mit einem Aufnahmekörper (2), einer im Aufnahmekörper (2) angeordneten Aufnahmeöffnung (3) für einen Werkzeugschaft, einem im vorderen Bereich der Aufnahmeöffnung (3) angeordneten Stau- und Sammelraum (7) und mindestens einem zu dem Stau- und Sammelraum (7) führenden Kühlmittelzufuhrkanal (10), wobei der Stau- und Sammelraum (7) durch einen am vorderen Ende der Aufnahmeöffnung (3) angeordneten Ringsteg (8) nach vorne begrenzt wird, wobei der Innendurchmesser des Ringstegs (8) so an den Innendurchmesser der Aufnahmeöffnung (3) angepasst ist, dass zwischen dem Ringsteg (8) und dem Werkzeugschaft möglichst kein Ringspalt besteht, und wobei im Ringsteg (8) mehrere Auslassöffnungen (5) für den Austritt eines über den Kühlmittelzufuhrkanal (10) in den Stau- und Sammelraum (7) geleiteten Kühlmittels nach außen vorgesehen sind, **dadurch gekennzeichnet, dass** der Kühlmittelzuführkanal (10) und die Auslassöffnungen (5) in Umfangsrichtung des Aufnahmekörpers (2) zum Teil oder vollständig zueinander versetzt sind.

2. Schrumpffutter nach Anspruch 1, **dadurch gekennzeichnet, dass** der Innendurchmesser des Ringstegs (8) dem Innendurchmesser der Aufnahmeöffnung (3) entspricht.

3. Schrumpffutter nach Anspruch 1 oder 2, **dadurch gekennzeichnet, dass** der Ringsteg (8) durch eine am vorderen Ende des Aufnahmekörpers (2) angeordnete und mit diesem fest verbundene Deckscheibe (4) gebildet wird.

4. Schrumpffutter nach Anspruch 2, **dadurch gekennzeichnet, dass** die Deckscheibe (4) in eine Vertiefung (9) am vorderen Ende des Aufnahmekörpers (2) eingesetzt ist.

5. Schrumpffutter nach Anspruch 3 oder 4, **dadurch gekennzeichnet, dass** die Deckscheibe (4) mit dem Aufnahmekörper (2) verschweißt ist.

6. Schrumpffutter nach einem oder mehreren der vorhergehenden Ansprüche, **dadurch gekennzeichnet, dass** die Auslassöffnungen (5) als schmale Schlitze und/oder Langlöcher und/oder Bohrungen ausgebildet sind.

7. Schrumpffutter nach einem der Ansprüche 1 bis 6, **dadurch gekennzeichnet, dass** die Auslassöffnungen (5) aus mehreren Reihen von Bohrungen gebildet sind.

8. Schrumpffutter nach Anspruch 6 oder 7, **dadurch gekennzeichnet, dass** die als Bohrungen gebildeten Auslassöffnungen (5) verschiedene Winkel bezüglich der Mittelachse des Schrumpffutters aufweisen.

9. Schrumpffutter nach einem der Ansprüche 1 bis 8, **dadurch gekennzeichnet, dass** die Kühlmittelzufuhrkanäle (10) als Bohrungen innerhalb des Aufnahmekörpers (2) ausgebildet sind.

10. Schrumpffutter nach einem der Ansprüche 1 bis 8, **dadurch gekennzeichnet, dass** die Kühlmittelzufuhrkanäle (10) als Längsnuten am Innenumfang der Aufnahmeöffnung (3) ausgebildet sind.

## Claims

1. Shrink-fit chuck (1) having a receiving body (2), having a receiving opening (3), arranged in the receiving body (2), for a tool shank, having a storage and collecting space (7) arranged in the front region of the receiving opening (3), and having at least one coolant feed channel (10) leading to the storage and collecting space (7), wherein the storage and collecting space (7) is delimited towards the front by an annular web (8) which is arranged at the front end of the receiving opening (3), wherein the inner diameter of the annular web (8) is adapted to the inner diameter of the receiving opening (3) in such a way that as far as possible no annular gap is present between the annular web (8) and the tool shank, and wherein provision is made in the annular web (8) of multiple outlet openings (5) for exit towards the outside of a coolant conducted into the storage and collecting space (7) via the coolant feed channel (10), **characterized in that** the coolant feed channel (10) and the outlet openings (5) are partially or fully offset from one another in a circumferential direction of the receiving body (2).

2. Shrink-fit chuck according to Claim 1, **characterized in that** the inner diameter of the annular web (8) corresponds to the inner diameter of the receiving opening (3).

3. Shrink-fit chuck according to Claim 1 or 2, **characterized in that** the annular web (8) is formed by a cover disc (4) which is arranged on the front end of the receiving body (2) and which is connected fixedly thereto.

4. Shrink-fit chuck according to Claim 2, **characterized in that** the cover disc (4) is inserted into a depression (9) at the front end of the receiving body (2).

5. Shrink-fit chuck according to Claim 3 or 4, **characterized in that** the cover disc (4) is welded to the receiving body (2).

6. Shrink-fit chuck according to one or more of the preceding claims, **characterized in that** the outlet openings (5) are in the form of narrow slots and/or elongate holes and/or bores.

7. Shrink-fit chuck according to one of Claims 1 to 6, **characterized in that** the outlet openings (5) are formed from multiple rows of bores.

8. Shrink-fit chuck according to Claim 6 or 7, **characterized in that** the outlet openings (5) in the form of bores are at different angles to the central axis of the shrink-fit chuck.

9. Shrink-fit chuck according to one of Claims 1 to 8, **characterized in that** the coolant feed channels (10) are in the form of bores within the receiving body (2) .

10. Shrink-fit chuck according to one of Claims 1 to 8, **characterized in that** the coolant feed channels (10) are in the form of longitudinal grooves at the inner circumference of the receiving opening (3).

## Revendications

1. Mandrin de frettage (1) comprenant un corps de logement (2), un orifice de logement (3) disposé dans le corps de logement (2) et destiné à une tige d'outil, un espace de retenue et de collecte (7) disposé dans la zone avant de l'orifice de logement (3), et au moins un canal d'amenée d'agent de refroidissement (10) menant à l'espace de retenue et de collecte (7), dans lequel l'espace de retenue et de collecte (7) est délimité vers l'avant par une nervure annulaire (8) disposée à l'extrémité avant de l'orifice de logement (3), dans lequel le diamètre intérieur de la nervure annulaire (8) est adapté au diamètre intérieur de l'orifice de logement (3) de telle sorte qu'il n'y a si possible pas d'interstice annulaire entre la nervure annulaire (8) et la tige d'outil, et dans lequel, dans la nervure annulaire (8), plusieurs orifices de sortie (5) sont prévus pour la sortie vers l'extérieur d'un agent de refroidissement guidé par le canal d'amenée d'agent de refroidissement (10) dans l'espace de retenue et de collecte (7), **caractérisé en ce que** le canal d'amenée d'agent de refroidissement (10) et les orifices de sortie (5) sont décalés en partie ou complètement les uns par rapport aux autres dans la direction circonférentielle du corps de logement (2).

2. Mandrin de frettage selon la revendication 1, **caractérisé en ce que** le diamètre intérieur de la nervure annulaire (8) correspond au diamètre intérieur de l'orifice de logement (3).

3. Mandrin de frettage selon la revendication 1 ou 2, **caractérisé en ce que** la nervure annulaire (8) est formée par un disque de recouvrement (4) disposé à l'extrémité avant du corps de logement (2) et relié solidement à celui-ci.

4. Mandrin de frettage selon la revendication 2, **caractérisé en ce que** le disque de recouvrement (4) est inséré dans un creux (9) à l'extrémité avant du corps de logement (2).

5. Mandrin de frettage selon la revendication 3 ou 4, **caractérisé en ce que** le disque de recouvrement (4) est soudé au corps de logement (2).

6. Mandrin de frettage selon une ou plusieurs des revendications précédentes, **caractérisé en ce que** les orifices de sortie (5) sont réalisés sous forme de fentes étroites et/ou de trous oblongs et/ou d'alésages.

7. Mandrin de frettage selon l'une quelconque des revendications 1 à 6, **caractérisé en ce que** les orifices de sortie (5) sont formés par plusieurs rangées d'alésages.

8. Mandrin de frettage selon la revendication 6 ou 7, **caractérisé en ce que** les orifices de sortie (5) réalisés sous forme d'alésages présentent différents angles par rapport à l'axe central du mandrin de frettage.

9. Mandrin de frettage selon l'une quelconque des revendications 1 à 8, **caractérisé en ce que** les canaux d'amenée d'agent de refroidissement (10) sont réalisés sous forme d'alésages à l'intérieur du corps de logement (2) .

10. Mandrin de frettage selon l'une quelconque des revendications 1 à 8, **caractérisé en ce que** les canaux d'amenée d'agent de refroidissement (10) sont réalisés sous forme de rainures longitudinales sur la circonférence intérieure de l'orifice de logement (3).
